**Europäisches Patentamt**

**European Patent Office**

**Office européen des brevets**

(19)

(11) Veröffentlichungsnummer : **0 057 905**
**B1**

(12) **EUROPÄISCHE PATENTSCHRIFT**

(45) Veröffentlichungstag der Patentschrift :
**13.06.84**

(21) Anmeldenummer : **82100761.4**

(22) Anmeldetag : **03.02.82**

(51) Int. Cl.³ : **C 09 B 67/24**, D 06 P 3/66

(54) **Farbstoffzubereitungen und ihre Verwendung.**

(30) Priorität : **10.02.81 DE 3104605**

(43) Veröffentlichungstag der Anmeldung :
**18.08.82 Patentblatt 82/33**

(45) Bekanntmachung des Hinweises auf die Patenterteilung : **13.06.84 Patentblatt 84/24**

(84) Benannte Vertragsstaaten :
**BE CH DE FR GB IT LI**

(56) Entgegenhaltungen :
**EP-A- 0 014 326**
**FR-A- 2 264 850**
**CHEMICAL ABSTRACTS, Band 94, Nr. 12, März 1981, Zusammenfassung 85596n, Seite 81, COLUMMBUS OHIO (US)**

(73) Patentinhaber : **HOECHST AKTIENGESELLSCHAFT**
**Postfach 80 03 20**
**D-6230 Frankfurt am Main 80 (DE)**

(72) Erfinder : **Opitz, Konrad, Dr.**
**Schwedenstrasse 22**
**D-6237 Liederbach (DE)**

EP 0 057 905 B1

**Beschreibung**

Zubereitungen, die den Reaktivfarbstoff C.I. Reactive Blue 19 in Form des Natriumsalzes, Natrium-antrachinon-2-sulfonat, ein Tensid und ggf. ein Entstaubungsmittel enthalten, sind bereits aus der DE-C 24 12 964 und aus der EP-A 14 326 bekannt. Diese Zubereitungen eignen sich zur Herstellung tiefer und egaler Färbungen, neigen jedoch beim Drucken, insbesondere bei der Herstellung. hoher Metragen oder Beim Arbeiten mit schnelllaufenden Maschinen zur Erzeugung unruhiger, unegaler oder gleckiger Drucke.

Es wurde nun gefunden, daß man Zubereitungen dieses Farbstoffs erhält, die die Vorzüge der bekannten Zubereitungen zeigen, nicht jedoch die Nachteile beim Drucken, wenn man als Tensid ein Natrium-Ligninsulfonat einsetzt.

Die Erfindung betrifft deshalb Zubereitungen von C.I. Reactive Blue 19 (Natriumsalz) mit einem Gehalt an Natrium-antrachinon-2-sulfonat, einem Tensid und gegebenenfalls einem Entstaubungsmittel, die dadurch gekennzeichnet sind, daß das Tensid ein Natrium-Ligninsulfonat ist.

Bevorzugte Ausgestaltungen der Erfindung werden im folgenden näher erläutert, wobei sich Prozentangaben auf das Gewicht beziehen.

Der Farbstoffgehalt kann in weiten Grenzen schwanken und liegt zweckmäßig bei etwa 20 bis 70, vorzugsweise etwa 30 bis 65 %. Der Gehalt an Natrium-antrachinon-2-sulfonat liegt zweckmäßig bei etwa 3 bis 20, insbesondere etwa 5 bis 15 %.

Als Ligninsulfonat können alle handelsübliche Präparate eingesetzt werden. Der Gehalt an Natrium-Ligninsulfonat liegt zweckmäßig bei 5 bis 40, insbesondere 15 bis 30 %.

Sofern die Zusammensetzung ein Entstaubungsmittel enthält, können hierfür die üblichen Hilfsmittel eingesetzt werden. Zweckmäßig ist Mineralöl, vorzugsweise in Form einer Emulsion. Der Gehalt an Entstaubungsmittel kann etwa 0,1 bis 5 % betragen.

Die Farbstoffzubereitung kann darüberhinaus noch weitere Hilfsmittel wie Harnstoff und/oder kondensierte Phosphate in Form ihrer Natriumsalze enthalten. Außerdem können darin noch Elektrolyte wie Alkalihalogenide oder -sulfate, die aus dem Herstellungsprozeß des Farbstoffs stammen können, in untergeordneter Menge enthalten sein.

Die erfindungsgemäßen Zubereitungen werden durch Vermischen oder Vermahlen der trockenen Bestandteile hergestellt. Es ist auch möglich, die Bestandteile in Gegenwart eines Lösemittels, insbesondere Wasser, bzw. in Form ihrer Lösungen zu mischen und die Mischungen anschließend zu trocknen, beispielsweise durch Sprühtrocknung. Vorteilhaft werden einer bei der Synthese des Farbstoffs anfallenden Lösungen die übrigen Bestandteile zugesetzt und diese. Mischung getrocknet, vorzugsweise durch Sprühtrocknung.

Die erfindungsgemäßen Zubereitungen lassen sich leicht in Färbebäder und Druckpasten einarbeiten. Beim Färben werden damit tiefe und egale Färbungen erhalten und nach der Einarbeitung in Druckpasten werden einwandfreie, egale Drucke auch beim Einsatz schnellaufender Maschinen erzielt.

In den folgenden Beispielen beziehen sich Teile und Prozentangaben auf das Gewicht. Unter « Farbstoff » ist C.I. Reactive Blue 19 in Form des Natriumsalzes zu verstehen.

Beispiel 1

70,4 Teile Farbstoff mit einem Reingehalt von 71 % werden mit 9 Teilen Anthrachinon-2-sulfonsäure (Natriumsalz), 20 Teilen Natriumsalz einer Ligninsulfonsäure und 0,6 Teilen einer Mineralölemulsion in einem runden Behälter auf dem Rolltisch vermischt.

Wenn von der resultierenden Farbstoffzubereitung 40 Teile in 960 Teile einer Stammverdickung eingearbeitet werden, erhält man eine Druckpaste, die beim Drucken egale, einwandfreie Drucke ergibt. Die verwendete Stammverdickung setzt sich aus 435 Teilen 4 %iger Alginatverdickung, 22 Teilen Natriumhydrogencarbonat, 11 Teilen Natrium-m-nitrobenzolsulfonat, 50 Teilen Harnstoff und 482 Teilen Wasser zusammen.

Beispiel 2

600 Teile einer bei der Herstellung anfallenden wäßrigen Lösung von 70,4 Teilen des Farbstoffs mit einem Reingehalt von 71 % werden unter Rühren mit 9 Teilen Anthrachinon-2-sulfonsäure (Natriumsalz) und 20 Teilen Natriumsalz einer Ligninsulfonsäure versetzt und sprühgetrocknet. Das resultierende Pulver wird mit 0,6 Teilen einer Mineralölemulsion vermischt. Die so erhaltene Farbstoffzubereitung liefert mit der im Beispiel 1 beschriebenen Stammverdickung ebenfalls eine Druckpaste, die ohne Störungen zu verdrucken ist.

Beispiel 3

70,4 Teile des Farbstoffs mit einem Reingehalt von 71 % werden mit 6 Teilen Anthrachinon-2-sulfonsäure (Natriumsalz), 21,6 Teilen Natriumsalz einer Ligninsulfonsäure und 2 Teilen Mineralölemulsion in einer Stiftscheibenmühle vermahlen. Die resultierende Farbstoffzubereitung liefert mit der in Beispiel 1 beschriebenen Stammverdickung eine Druckpaste, die ohne Störungen verdruckt werden kann.

Beispiel 4

600 Teile einer bei der Herstellung anfallenden wäßrigen Lösung von 66 Teilen des Farbstoffs mit einem Reingehalt von 75,8 % werden unter Rühren mit 12 Teilen Ahthrachinon-2-sulfonsäure (Natriumsalz), 20 Teilen Natriumsalz einer Ligninsulfonsäure und 1 Teil einer Mineralölemulsion versetzt und sprühgetrocknet. Das resultierende Pulver wird mit 1 weiteren Teil Mineralölemulsion versmicht. Die so erhaltene Farbstoffzubereitung liefert mit der im Beispiel 1 beschriebenen Stammverdickung Druckpasten, die einwandfrei verdruckt werden können.

Beispiel 5

66 Teile des Farbstoffs mit 75,8 % Reingehalt werden mit 5 Teilen Anthrachinon-2-sulfonsäure (Natriumsalz), 22 Teilen Natriumsalz einer Ligninsulfonsäure, 3 Teilen Harnstoff, 3 Teilen eines kondensierten phosphats (Natriumsalz) und 1 Teil einer Mineralölemulsion in einem runden Behälter auf dem Rolltisch vermischt. Die erhaltene Farbstoffzubereitung liefert mit der in Beispiel 1 beschriebenen Stammverdickung Druckpasten, die einwandfrei zu verdrucken sind.

## Ansprüche

1. Zubereitungen von C.I. Reactive Blue 19 (Natriumsalz) mit einem Gehalt an Natrium-antrachinon-2-sulfonat und einem Tensid, dadurch gekennzeichnet, daß das Tensid ein Natrium-Ligninsulfonat ist.

2. Zubereitungen nach Anspruch 1, dadurch gekennzeichnet, daß sie ein Entstaubungsmittel enthalten.

3. Zubereitungen nach Anspruch 1 und 2, dadurch gekennzeichnet, daß sie als Entstaubungsmittel Mineralöl oder eine Mineralölemulsion enthalten.

4. Farbstoffzubereitungen nach Anspruch 1 bis 3, dadurch gekennzeichnet, daß sie Harnstoff und/oder ein kondensiertes Phosphat (Natriumsalz) enthalten.

5. Zubereitungen nach Anspruch 1 bis 4, gekennzeichnet durch einen Gehalt an

20 bis 70 Gew.-% Farbstoff,
3 bis 20 Gew.-% Natrium-antrachinon-2-sulfonat und
5 bis 40 Gew.-% Natrium-Ligninsulfonat.

6. Zubereitungen nach Anspruch 1 bis 5, gekennzeichnet durch einen Gehalt an

30 bis 65 Gew.-% Farbstoff,
5 bis 15 Gew.-% Natrium-antrachinon-2-sulfonat und
15 bis 30 Gew.-% Natrium-Ligninsulfonat.

7. Zubereitungen nach Anspruch 1 bis 6, gekennzeichnet durch einen Gehalt an 0,1 bis 5 Gew.-% Entstaubungsmittel.

8. Verwendung der Zubereitungen nach Anspruch 1 bis 7 zum Färben oder Bedrucken von natürlichen oder regenerierten Cellulosefasermaterialien.

## Claims

1. A dyestuff composition containing C.I. Reactive Blue 19 (sodium salt), sodium anthraquinone-2-sulfonate and a surfactant, wherein the surfactant is a sodium ligninsulfonate.

2. A composition as claimed in claim 1, which contains additionally a dust-preventing agent.

3. A composition as claimed in Claims 1 and 2 wherein the dust-preventing agent is a mineral oil or mineral oil emulsion.

4. A composition as claimed in Claims 1 to 3, which contains additionally urea and/or a condensed phosphate (sodium salt).

5. A composition as claimed in Claims 1 to 4, which comprises

from 20 to 70 weight % of dyestuff,
from 3 to 20 weight % of sodium anthraquinone-2-sulfonate and
from 5 to 40 weight % of sodium ligninsulfonate.

6. A composition as claimed in Claims 1 to 5, which comprises

from 30 to 65 weight % of dyestuff,
from 5 to 15 weight % of sodium anthraquinone-2-sulfonate and
from 15 to 30 weight % of sodium ligninsulfonate.

7. A composition as claimed in Claims 1 to 6, which comprises from 0.1 to 5 weight % of dust-preventing agent.

8. Use of the compositions as claimed in Claims 1 to 7 for dyeing or printing of natural or regenerated cellulose fiber materials.

## Revendications

1. Préparations du colorant C.I. Reactive Blue 19 sous la forme de son sel sodique, contenant de l'anthraquinone-2-sulfonate de sodium et un agent surfactif, préparations caractérisées en ce que le surfactif est un lignine-sulfonate de sodium.

2. Préparations selon la revendication 1 caractérisées en ce qu'elles contiennent un agent contre les poussières.

3. Préparations selon la revendication 1 ou 2, caractérisées en ce que l'agent contre les poussières est une huile minérale ou une émulsion d'huile minérale.

4. Préparations selon l'une quelconque des revendications 1 à 3, caractérisées en ce qu'elles contiennent de l'urée et/ou un phosphate condensé à l'état de sel sodique.

5. Préparations selon l'une quelconque des revendications 1 à 4, caractérisées en ce qu'elles contiennent

20 à 70 % en poids du colorant,
3 à 20 % en poids d'anthraquinone-2 sulfonate de sodium et
5 à 40 % en poids de lignine-sulfonate de sodium.

6. Préparations selon l'une quelconque des revendications 1 à 5, caractérisées en ce qu'elles contiennent

30 à 65 % en poids du colorant
5 à 15 % en poids d'anthraquinone-2-sulfonate de sodium et

15 à 30 % en poids de lignine-sulfonate de sodium.

7. Préparations selon l'une quelconque des revendications 1 à 6, caractérisées en ce qu'elles contiennent 0,1 à 5 % en poids de l'agent contre les poussières.

8. Utilisation des préparations selon l'une quelconque des revendications 1 à 7 pour la teinture ou l'impression notamment de matières fibreuses en cellulose naturelle ou régénérée.